# EUROPÄISCHE PATENTSCHRIFT

(11) **EP 4 630 290 B1**
(45) Veröffentlichungstag und Bekanntmachung des Hinweises auf die Patenterteilung: **19.08.2026**
(21) Anmeldenummer: 23793358.5
(22) Anmeldetag: 19.10.2023
(51) Int. Cl.: B60Q 3/208, B60J 7/043

(54) **FAHRZEUGDACH**
VEHICLE ROOF
TOIT DE VEHICULE

(30) Priorität: 05.12.2022 DE 102022004538
(43) Veröffentlichungstag der Anmeldung: 15.10.2025
(73) Patentinhaber: Mercedes-Benz Group AG, 70372 Stuttgart (DE)
(72) Erfinder: DEMMER, Achim, 71106 Magstadt (DE)
(74) Vertreter: Novagraaf Group
(86) Internationale Anmeldenummer: PCT/EP2023/079187
(87) Internationale Veröffentlichungsnummer: WO 2024/120682

(56) Entgegenhaltungen:
- WO-A1-2011/007070
- WO-A1-2018/219657
- WO-A1-2023/151917
- DE-A1- 102015 000 071
- DE-A1- 102018 123 196

## Beschreibung

Die Erfindung betrifft ein Fahrzeugdach gemäß dem Oberbegriff des Patentanspruchs 1.

In Fahrzeugdächern von Fahrzeugen ist oftmals eine Glasfläche ausgebildet, die beispielsweise als Panoramadach oder als Glasdach bezeichnet wird. Diese Glasfläche kann auch mit einer optischen Einheit zur Beleuchtung verbunden sein.

Zu dieser Thematik ist in der EP 3 744 544 A1 ein Fahrzeug beschrieben, bei dem eine Glasscheibe mit einem Rahmen in einem Fahrzeugdach integriert ist. Eine längliche Beleuchtungseinrichtung ist mit dem Rahmen verbunden und so konfiguriert, dass der Fahrgastraum des Fahrzeugs direkt beleuchtet wird.

Weiterhin ist in der DE 10 2018 116 340 A1 ein Fahrzeugdachsystem offenbart, bei dem durch eine im Dachrahmen angeordnete optische Einheit ein dreidimensionales stehendes Bild im Fahrzeuginnenraum erzeugt wird.

Zum weiteren Stand der Technik offenbart die WO 2018/219657 A1 eine Fahrzeugscheibe mit einer Beleuchtungseinrichtung, die von einer Abdeckung überdeckt ist. Die DE 10 2015 000 071 A1 zeigt einen Deckel für ein Fahrzeugdach, bei dem eine Leuchteinheit an einer Positionierleiste angeordnet ist. Die WO 2011/007070 A1 beschreibt eine Verdunkelungsvorrichtung mit einem in einer Führungsschiene integrierten Lichtleiter. Schließlich offenbart die DE 10 2018 123 196 A1 ein Fahrzeugdach, bei dem ein Lichtleiter unterhalb eines Trägers angeordnet ist, um den Fahrzeuginnenraum zu beleuchten.

Der Erfindung liegt die Aufgabe zugrunde, ein gattungsgemäßes Fahrzeugdach anzugeben, bei dem auf einfache und vorteilhafte Weise eine Beleuchtung einer Glasfläche des Fahrzeugdachs ermöglicht wird.

Diese Aufgabe wird gemäß der Erfindung durch ein Fahrzeugdach mit den Merkmalen des Patentanspruchs 1 gelöst.

Vorteilhafte Weiterbildungen der Erfindung sind Bestandteil der weiteren Patentansprüche.

Erfindungsgemäß ist beim Fahrzeugdach mit einer in einem Rahmen im Fahrzeugdach vorgesehenen Glasfläche diese Glasfläche in eine rechteckförmige transparente Durchsichtsfläche und eine sich peripher an die rechteckförmige transparente Durchsichtsfläche anschließende rechteckförmige intransparente Randfläche unterteilt. Im Randbereich der rechteckförmigen intransparenten Randfläche ist auf beiden Längsseiten der rechteckförmigen intransparenten Randfläche angrenzend an die rechteckförmige transparente Durchsichtsfläche auf der rechteckförmigen intransparenten Randfläche jeweils ein lichtundurchlässiger länglicher Trägerkörper angeordnet, der sich vorzugsweise über die gesamte Längsseite der rechteckförmigen transparenten Durchsichtsfläche hinweg erstreckt.

Auf der Oberseite dieser beiden lichtundurchlässigen länglichen Trägerkörper ist als optische Einheit jeweils ein LED-Modul mit einer Vielzahl von LEDs angeordnet, deren emittierte Strahlung in die rechteckförmige transparente Durchsichtsfläche der Glasfläche eingekoppelt wird. Durch den als Abschirmung fungierenden lichtundurchlässigen länglichen Trägerkörper wird verhindert, dass die von den LEDs der beiden LED-Module emittierte Strahlung in den Innenraum des Fahrzeugs gelangen kann.

Weiterhin sind auf der Unterseite des lichtundurchlässigen länglichen Trägerkörpers mehrere Befestigungselemente zur Befestigung des lichtundurchlässigen länglichen Trägerkörpers im Dachhimmel beziehungsweise in der Dachverkleidung des Fahrzeugdachs angeformt. Diese Befestigungselemente sind vorzugsweise als Befestigungshaken ausgebildet, die in korrespondierende Aufnahmen im Dachhimmel beziehungsweise in der Dachverkleidung des Fahrzeugdachs eingreifen, beispielsweise in diese Aufnahmen im Dachhimmel beziehungsweise in der Dachverkleidung des Fahrzeugdachs eingeklipst werden.

Bei einem LED-Modul als optischer Einheit sind vorzugsweise mindestens 20 LEDs vorgesehen, beispielsweise mindestens 30 LEDs, die beabstandet voneinander angeordnet auf dem lichtundurchlässigen länglichen Trägerkörper aufgebracht sind. Beispielsweise sind die LEDs eines LED-Moduls äquidistant zueinander angeordnet und beispielsweise auf dem lichtundurchlässigen länglichen Trägerkörper aufgeklebt.

Zur Befestigung des jeweiligen lichtundurchlässigen länglichen Trägerkörpers im Dachhimmel beziehungsweise in der Dachverkleidung des Fahrzeugdachs sind vorzugsweise mindestens 5 Befestigungselemente vorgesehen, beispielsweise mindestens 7 Befestigungselemente, die beabstandet voneinander an dem jeweiligen lichtundurchlässigen länglichen Trägerkörper angeformt sind und damit mit diesem eine einstückige Einheit bilden. Beispielsweise sind die an dem jeweiligen lichtundurchlässigen länglichen Trägerkörper angeformten Befestigungselemente äquidistant zueinander angeordnet.

Der jeweilige lichtundurchlässige längliche Trägerkörper ist vorzugsweise aus einem lichtundurchlässigen Kunststoff ausgebildet, und besteht hierzu beispielsweise aus Polypropylen (PP) oder aus Acrylnitril-Butadien-Styrol (ABS).

Der jeweilige rechteckförmige lichtundurchlässige längliche Trägerkörper ist im Randbereich der rechteckförmigen intransparenten Randfläche des Glasdachs vorzugsweise mittels eines lichtundurchlässigen Befestigungselements auf der rechteckförmigen intransparenten Randfläche des Glasdachs befestigt, insbesondere mittels eines lichtundurchlässigen Klebstoffs an bestimmten Klebestellen auf der rechteckförmigen intransparenten Randfläche des Glasdachs aufgeklebt. Durch das als Abschirmung fungierende lichtundurchlässige Befestigungselement, beispielsweise durch den lichtundurchlässigen Klebstoff, wird verhindert, dass die von den LEDs der beiden LED-Module emittierte Strahlung als Streustrahlung an unerwünschten Stellen seitlich aus dem lichtundurchlässigen länglichen Trägerkörper austreten kann.

Zur flächigen Verteilung der in die rechteckförmige transparente Durchsichtsfläche des Glasdachs eingekoppelten Strahlung der LEDs des jeweiligen LED-Moduls, sind im Glasdach, vorzugsweise im Randbereich zwischen der rechteckförmigen intransparenten Randfläche des Glasdachs und der rechteckförmigen transparenten Durchsichtsfläche des Glasdachs, beispielsweise als optische Prismen ausgebildete optische Streuelemente vorgesehen. Durch diese optischen Streuelemente wird die in die rechteckförmige transparente Durchsichtsfläche des Glasdachs eingekoppelte Strahlung der LEDs des jeweiligen LED-Moduls in der rechteckförmigen transparenten Durchsichtsfläche des Glasdachs homogen verteilt, so dass hierdurch vorteilhafterweise die gesamte Fläche der rechteckförmigen transparenten Durchsichtsfläche des Glasdachs beleuchtet wird und auch homogen ausgeleuchtet wird.

Die LEDs der beiden LED-Module werden hierbei so ausgewählt beziehungsweise entsprechend angesteuert, dass für die in die rechteckförmige transparente Durchsichtsfläche des Glasdachs eingekoppelte Strahlung eine von einem Anwender auswählbare beliebige Farbgebung eingestellt beziehungsweise je nach Wunsch beliebig vorgegeben werden kann.

In einer vorteilhaften Weiterbildung der Erfindung ist ein jeweiliger lichtundurchlässiger länglicher Trägerkörper in mindestens zwei beabstandet voneinander angeordnete Trägersegmente unterteilt, beispielsweise in vier beabstandet voneinander angeordnete Trägersegmente, die dann zusammen die Funktionalität eines einheitlichen lichtundurchlässigen länglichen Trägerkörpers ausbilden. Diese Unterteilung der lichtundurchlässigen länglichen Trägerkörper in einzelne Trägersegmente wird entsprechend den (geometrischen) Gegebenheiten des Fahrzeugdachs und abhängig von der zu realisierenden Strahlungseinkopplung der von den LEDs des jeweiligen LED-Moduls emittierten Strahlung und deren Ansteuerung gewählt.

Insbesondere sind jedem der derartig realisierten Trägersegmente mindestens 5 LEDs zugeordnet, deren emittierte Strahlung dann in einem bestimmten Bereich in die rechteckförmige transparente Durchsichtsfläche des Glasdachs eingekoppelt wird. Insbesondere weist jedes der derartig realisierten Trägersegmente zur Befestigung im Dachhimmel beziehungsweise in der Dachverkleidung des Fahrzeugdachs mindestens zwei angeformte Befestigungselemente auf und wird mittels eines lichtundurchlässigen Klebstoffs an bestimmten Klebestellen in einem bestimmten Abschnitt des Randbereichs der rechteckförmigen intransparenten Randfläche des Glasdachs angrenzend an die rechteckförmige transparente Glasfläche des Fahrzeugdachs auf die rechteckförmige intransparente Randfläche des Glasdachs aufgeklebt.

Vorteilhafterweise kann beim erfindungsgemäßen Fahrzeugdach durch den lichtundurchlässigen länglichen Trägerkörper integrativ sowohl eine Aufnahmemöglichkeit für das zur Strahlungsemission in die rechteckförmige transparente Durchsichtsfläche des Glasdachs vorgesehene LED-Modul als auch eine Befestigungsmöglichkeit für die Glasfläche des Fahrzeugdachs im Dachhimmel beziehungsweise in der Dachverkleidung des Fahrzeugdachs realisiert werden und hierdurch ansonsten benötigter Bauraum insbesondere in Querrichtung des Fahrzeugdachs eingespart werden.

Demzufolge kann auch im Fahrzeugdach eine größere Fläche als rechteckförmige transparente Durchsichtsfläche des Glasdachs bereitgestellt werden und insbesondere auch die zur Beleuchtung vorgesehene Fläche im Fahrzeugdach vergrößert werden, was wiederum auch Benutzern des Fahrzeugs zugute kommen kann.

Weitere Vorteile, Merkmale und Einzelheiten der Erfindung ergeben sich aus der nachfolgenden Beschreibung eines bevorzugten Ausführungsbeispiels sowie anhand der Zeichnungen. Die vorstehend in der Beschreibung genannten Merkmale und Merkmalskombinationen sowie die nachfolgend in der Figurenbeschreibung genannten und/oder in den beiden Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Dabei zeigen:
- Fig. 1: Eine schematische Ansicht von unten auf einen Ausschnitt eines Fahrzeugdachs mit einer integrierten Glasfläche.
- Fig. 2: Eine schematische Schnittdarstellung des Fahrzeugdachs mit einer integrierten Glasfläche.

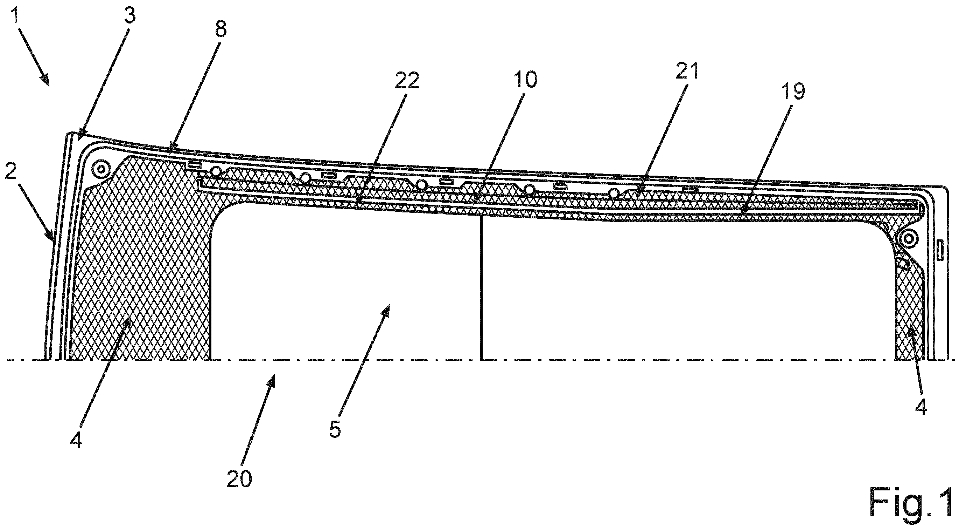

Gemäß der Figur 1 mit der Darstellung eines Ausschnitts eines Fahrzeugdachs 1 ist bei diesem Fahrzeugdach 1 ein rechteckförmiges Einlegeteil 2 mit den Abmessungen von beispielsweise ca.1800 mm x 1150 mm in das Fahrzeugdach 1 eingebracht.

Dieses rechteckförmige Einlegeteil 2 weist einen beispielsweise aus Kunststoff bestehenden rechteckförmigen Rahmen 3 auf, an dem umlaufend eine Kleberaupe 8 aufgebracht ist, mittels der das rechteckförmige Einlegeteil 2 an der Karosserie des Fahrzeugs durch Aufkleben befestigt werden kann.

Weiterhin ist im rechteckförmigen Einlegeteil 2 beziehungsweise im rechteckförmigen Rahmen 3 eine rechteckförmige Glasfläche 20 vorgesehen, die eine rechteckförmige transparente Durchsichtsfläche 5 und eine sich peripher im Randbereich 19 an die rechteckförmige transparente Durchsichtsfläche 5 anschließende beispielsweise durch eine schwarze Bedruckung rechteckförmige intransparente Randfläche 4 aufweist. Die rechteckförmige intransparente Randfläche 4 der Glasfläche 20 besitzt auf beiden Längsseiten 22 der rechteckförmigen transparenten Durchsichtsfläche 5 der Glasfläche 20 beispielsweise eine Breite von jeweils 100 mm bis 120 mm, so dass die rechteckförmige transparente Durchsichtsfläche 5 der Glasfläche 20 demzufolge eine Breite von beispielsweise ca. 900 mm bis 950 mm aufweist. Auf den beiden Breitseiten der rechteckförmigen transparenten Durchsichtsfläche 5 der Glasfläche 20 beträgt die Länge der rechteckförmigen intransparenten Randfläche 4 der Glasfläche 20 auf der in Fahrzeuglängsrichtung gesehenen vorderen Breitseite der rechteckförmigen transparenten Durchsichtsfläche 5 der Glasfläche 20 beispielsweise ca. 100 mm bis 150 mm und auf der in Fahrzeuglängsrichtung gesehenen hinteren Breitseite der rechteckförmigen transparenten Durchsichtsfläche 5 der Glasfläche 20 beispielsweise ca. 50 mm bis 100 mm, so dass die rechteckförmige transparente Durchsichtsfläche 5 der Glasfläche 20 demzufolge eine Länge von beispielsweise ca. 1600 mm aufweist.

Im Randbereich 19 zwischen der rechteckförmigen transparenten Durchsichtsfläche 5 der Glasfläche 20 und der rechteckförmigen intransparenten Randfläche 4 der Glasfläche 20 ist auf den beiden Längsseiten 21 der rechteckförmigen intransparenten Randfläche 4 der Glasfläche 20 und damit angrenzend zur rechteckförmigen transparenten Durchsichtsfläche 5 der Glasfläche 20 jeweils ein lichtundurchlässiger länglicher Trägerkörper 10 auf die rechteckförmige intransparente Randfläche 4 der Glasfläche 20 aufgebracht. Dieser lichtundurchlässige längliche Trägerkörper 10 erstreckt sich gemäß der Figur 1 beispielsweise entlang der gesamten Längsseite 22 der rechteckförmigen transparenten Durchsichtsfläche 5 der Glasfläche 20.

In einer in der Figur 1 dargestellten Ausführungsform ist der lichtundurchlässige längliche Trägerkörper 10 als einstückiges Bauteil ausgebildet. Der lichtundurchlässige längliche Trägerkörper 10 kann aber auch in zwei beabstandet voneinander angeordnete Trägersegmente oder in mehrere beabstandet voneinander angeordnete Trägersegmente unterteilt sein.

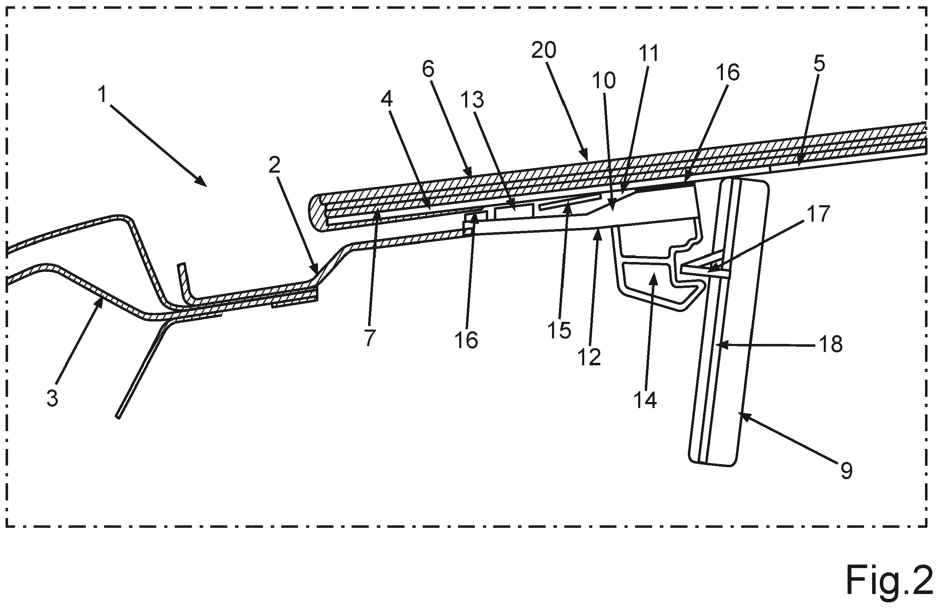

In der Schnittdarstellung gemäß der Figur 2 ist zu erkennen, dass ein jeweiliger beispielsweise aus einem lichtundurchlässigen Kunststoff bestehender länglicher Trägerkörper 10, beispielsweise ein jeweiliger aus einem ABS-Kunststoff (Acrylnitril-Butadien-Styrol) bestehender länglicher Trägerkörper 10, an Klebestellen 16 auf die rechteckförmige intransparente Randfläche 4 der Glasfläche 20 aufgeklebt ist. Die Glasfläche 20 ist hierbei als Verbundglas mit einer äußeren Glasscheibe 6 und einer inneren Glasscheibe 7 ausgebildet, wobei im Bereich der rechteckförmigen intransparenten Randfläche 4 der Glasfläche 20 die innere Glasscheibe 7 schwarz bedruckt und damit undurchsichtig ausgebildet ist.

Auf der Oberseite 11 des jeweiligen lichtundurchlässigen länglichen Trägerkörpers 10 ist ein LED-Modul 13 mit einer Vielzahl von beispielsweise äquidistant angeordneten LEDs vorgesehen. Beispielsweise sind 30 LEDs in einem LED-Modul 13 vorgesehen, die optische Strahlung in einem bestimmten Wellenlängenbereich emittieren, mittels der eine beliebige einstellbare Farbgebung durch entsprechende Ansteuerung der LEDs vorgegeben werden kann. Insbesondere kann auch von einem Anwender die jeweilige Farbgebung entsprechend seinen Wünschen und Vorlieben ausgewählt werden. Beispielsweise besitzt ein LED-Modul 13 eine Länge von 1000 mm bis 1200 mm, eine Breite von 20 mm bis 30 mm und eine Höhe von 20 mm.

Durch als Prismen 15 ausgebildete optische Streuelemente wird die von den LEDs der beiden LED-Module 13 emittierte optische Strahlung in die rechteckförmige transparente Durchsichtsfläche 5 der Glasfläche 20 eingeleitet und darin in der rechteckförmigen transparenten Durchsichtsfläche 5 der Glasfläche 20 durch Streueffekte homogen verteilt, so dass auch die gesamte sich an die rechteckförmige intransparente Randfläche 4 der Glasfläche 20 anschließende rechteckförmige transparente Durchsichtsfläche 5 der Glasfläche 20 homogen ausgeleuchtet wird.

Die Klebestellen 16 sind neben der Befestigung des lichtundurchlässigen länglichen Trägerkörpers 10 auf der rechteckförmigen intransparenten Randfläche 4 der Glasfläche 20 auch dazu vorgesehen, die LEDs des jeweiligen LED-Moduls 13 vor Beschädigungen und Witterungseinflüssen zu schützen und zu Strahlungsverlusten führendes Streulicht der LEDs des jeweiligen LED-Moduls 13 zu verhindern, das keinen Beitrag zu der in die rechteckförmige transparente Durchsichtsfläche 5 der Glasfläche 20 eingekoppelten optischen Strahlung der LEDs des jeweiligen LED-Moduls 13 liefert.

Auf der Unterseite 12 des jeweiligen lichtundurchlässigen länglichen Trägerkörpers 10 sind mehrere beispielsweise als Befestigungshaken ausgebildete Befestigungselemente 14 angeformt. Beispielsweise sind 7 derartige Befestigungshaken 14 äquidistant an einem jeweiligen länglichen Trägerkörper 10 einstückig angeformt.

Wie der Figur 2 zu entnehmen ist, greifen die Befestigungshaken 14 an im beispielsweise als stoffkaschiertes oder lederkaschiertes Kunststoffteil ausgebildeten Dachhimmel 9 des Fahrzeugdachs 1 vorgesehene korrespondierende Aufnahmen 17 ein und arretieren somit die Glasfläche 20 und folglich auch das gesamte Einlegeteil 2 im Dachhimmel 9 des Fahrzeugdachs 1. Die jeweilige Aufnahme 17 im Dachhimmel 9 des Fahrzeugdachs 1 ist mit einem zur Stabilisierung im Dachhimmel 9 integrierten Verstärkungselement 18 verbunden.

Falls der lichtundurchlässige längliche Trägerkörper 10 in zwei beabstandet voneinander angeordnete Trägersegmente oder in mehrere beabstandet voneinander angeordnete Trägersegmente unterteilt wird, ist jedes der Trägersegmente zur Aufnahme einer bestimmten Anzahl von LEDs und zur jeweiligen Befestigung im Dachhimmel 9 beziehungsweise in der Dachverkleidung des Fahrzeugdachs 1 vorgesehen und entsprechend ausgebildet. Zusammengenommen übernehmen dann die einzelnen Trägersegmente in ihrer Gesamtheit die Funktionalität eines einstückig ausgebildeten lichtundurchlässigen länglichen Trägerkörpers 10 hinsichtlich der Aufnahme einer optischen Einheit zur Emission optischer Strahlung in die rechteckförmige transparente Durchsichtsfläche 5 der Glasfläche 20 und hinsichtlich der Befestigung des Einlegeteils 2 im Dachhimmel 9 beziehungsweise in der Dachverkleidung des Fahrzeugdachs 1.

## Patentansprüche

1. Fahrzeugdach (1), mit einem Dachhimmel (9), mit einer Glasfläche (20) in einem im Fahrzeugdach (1) ausgebildeten Rahmen (3) und mit mindestens einem auf einem länglichen Trägerkörper (10) angeordneten LED-Modul (13),
wobei die Glasfläche (20) in eine rechteckförmige transparente Durchsichtsfläche (5) und eine sich peripher an die rechteckförmige transparente Durchsichtsfläche (5) anschließende rechteckförmige intransparente Randfläche (4) unterteilt ist,
wobei jeweils ein lichtundurchlässiger länglicher Trägerkörper (10) auf beiden Längsseiten (21) der rechteckförmigen intransparenten Randfläche (4) im an die rechteckförmige transparente Durchsichtsfläche (5) angrenzenden Randbereich (19) der rechteckförmigen intransparenten Randfläche (4) auf der rechteckförmigen intransparenten Randfläche (4) angeordnet ist, **dadurch gekennzeichnet,**
**dass** auf der Oberseite (11) des jeweiligen lichtundurchlässigen länglichen Trägerkörpers (10) ein LED-Modul (13) mit einer Vielzahl von LEDs angeordnet ist, und dass auf der Unterseite (12) des jeweiligen lichtundurchlässigen länglichen Trägerkörpers (10) mehrere Befestigungselemente (14) zur Befestigung des jeweiligen lichtundurchlässigen länglichen Trägerkörpers (10) im Dachhimmel (9) des Fahrzeugdachs (1) angeformt sind.

2. Fahrzeugdach (1) nach Anspruch 1,
**dadurch gekennzeichnet,**
**dass** ein LED-Modul (13) eines jeweiligen lichtundurchlässigen länglichen Trägerkörpers (10) mindestens 20 beabstandet voneinander angeordnete LEDs aufweist.

3. Fahrzeugdach (1) nach Anspruch 1 oder 2,
**dadurch gekennzeichnet,**
**dass** ein jeweiliger lichtundurchlässiger länglicher Trägerkörper (10) mindestens 5 beabstandet voneinander angeordnete Befestigungselemente (14) aufweist.

4. Fahrzeugdach (1) nach einem der Ansprüche 1 bis 3,
**dadurch gekennzeichnet,**
**dass** ein jeweiliger lichtundurchlässiger länglicher Trägerkörper (10) aus einem lichtundurchlässigen Kunststoff besteht.

5. Fahrzeugdach (1) nach einem der Ansprüche 1 bis 4,
**dadurch gekennzeichnet,**
**dass** ein jeweiliger lichtundurchlässiger länglicher Trägerkörper (10) mittels eines lichtundurchlässigen Klebstoffs an Klebestellen (16) auf die rechteckförmige intransparente Randfläche (4) der Glasfläche (20) aufgeklebt ist.

6. Fahrzeugdach (1) nach einem der Ansprüche 1 bis 5,
**dadurch gekennzeichnet,**
**dass** die Glasfläche (20) optische Streuelemente (15) zur flächigen Verteilung der in die rechteckförmige transparente Durchsichtsfläche (5) eingekoppelten Strahlung der LEDs eines jeweiligen LED-Moduls (13) aufweist.

7. Fahrzeugdach (1) nach einem der Ansprüche 1 bis 6,
**dadurch gekennzeichnet,**
**dass** die Befestigungselemente (14) zur Befestigung eines jeweiligen lichtundurchlässigen länglichen Trägerkörpers (10) im Dachhimmel (9) als Befestigungshaken ausgebildet sind.

8. Fahrzeugdach (1) nach einem der Ansprüche 1 bis 7,
**dadurch gekennzeichnet,**
**dass** ein jeweiliger lichtundurchlässiger länglicher Trägerkörper (10) in mindestens zwei beabstandet voneinander angeordnete Trägersegmente unterteilt ist.

9. Fahrzeugdach (1) nach Anspruch 8,
**dadurch gekennzeichnet,**
**dass** ein Trägersegment eines lichtundurchlässigen länglichen Trägerkörpers (10) mindestens zwei angeformte Befestigungselemente (14) aufweist.

10. Fahrzeugdach (1) nach Anspruch 8 oder 9,
**dadurch gekennzeichnet,**
**dass** ein Trägersegment eines lichtundurchlässigen länglichen Trägerkörpers (10) mindestens 5 LEDs aufweist.

## Claims

1. Vehicle roof (1), comprising a headliner (9), comprising a glass surface (20) in a frame (3) formed in the vehicle roof (1), and comprising at least one LED module (13) arranged on an elongate support body (10),
wherein the glass surface (20) is divided into a rectangular transparent viewing surface (5) and a rectangular intransparent edge surface (4) peripherally adjoining the rectangular transparent viewing surface (5),
wherein an opaque elongate support body (10) is arranged on each of the two longitudinal sides (21) of the rectangular intransparent edge surface (4) in the edge region (19), adjacent to the rectangular transparent viewing surface (5), of the rectangular intransparent edge surface (4) on the rectangular intransparent edge surface (4), **characterized**
**in that** an LED module (13) comprising a plurality of LEDs is arranged on the top side (11) of each opaque elongate support body (10), and **in that** a plurality of fastening elements (14) for fastening the relevant opaque elongate support body (10) in the headliner (9) of the vehicle roof (1) are molded onto the underside (12) of each opaque elongate support body (10).

2. Vehicle roof (1) according to claim 1,
**characterized**
**in that** an LED module (13) of each opaque elongate support body (10) has at least 20 mutually spaced LEDs.

3. Vehicle roof (1) according to claim 1 or 2,
**characterized**
**in that** each opaque elongate support body (10) has at least 5 mutually spaced fastening elements (14).

4. Vehicle roof (1) according to any of claims 1 to 3,
**characterized**
**in that** each opaque elongate support body (10) is made of an opaque plastics material.

5. Vehicle roof (1) according to any of claims 1 to 4,
**characterized**
**in that** each opaque elongate support body (10) is glued to the rectangular intransparent edge surface (4) of the glass surface (20) by means of an opaque adhesive at adhesive points (16).

6. Vehicle roof (1) according to any of claims 1 to 5,
**characterized**
**in that** the glass surface (20) has optical scattering elements (15) for the surface distribution of the radiation, coupled into the rectangular transparent viewing surface (5), from the LEDs of each LED module (13).

7. Vehicle roof (1) according to any of claims 1 to 6,
**characterized**
**in that** the fastening elements (14) for fastening a relevant opaque elongate support body (10) in the headliner (9) are in the form of fastening hooks.

8. Vehicle roof (1) according to any of claims 1 to 7,
**characterized**
**in that** each opaque elongate support body (10) is divided into at least two mutually spaced support segments.

9. Vehicle roof (1) according to claim 8,
**characterized**
**in that** a support segment of an opaque elongate support body (10) has at least two molded-on fastening elements (14).

10. Vehicle roof (1) according to claim 8 or 9,
**characterized**
**in that** a support segment of an opaque elongate support body (10) has at least 5 LEDs.

## Revendications

1. Toit de véhicule (1), comportant un ciel de toit (9), comportant une surface vitrée (20) dans un cadre (3) réalisé dans le toit de véhicule (1) et comportant au moins un module à DEL (13) disposé sur un corps de support allongé (10),
dans lequel la surface vitrée (20) est divisée en une surface de visualisation transparente de forme rectangulaire (5) et une surface de bord non transparente de forme rectangulaire (4) se raccordant sur la périphérie à la surface de visualisation transparente de forme rectangulaire (5),
dans lequel respectivement un corps de support allongé opaque (10) est disposé sur les deux côtés longitudinaux (21) de la surface de bord non transparente de forme rectangulaire (4), dans la zone de bord (19) de la surface de bord non transparente de forme rectangulaire (4) adjacente à la surface de visualisation transparente de forme rectangulaire (5), sur la surface de bord non transparente de forme rectangulaire (4), **caractérisé en ce**
**qu**'un module à DEL (13) comportant une pluralité de DEL est disposé sur le côté supérieur (11) du corps de support allongé opaque (10) respectif, et **que,** sur le côté inférieur (12) du corps de support allongé opaque (10) respectif sont moulés plusieurs éléments de fixation (14) destinés à la fixation du corps de support allongé opaque (10) respectif dans le ciel de toit (9) du toit de véhicule (1).

2. Toit de véhicule (1) selon la revendication 1,
**caractérisé en ce**
**qu**'un module à DEL (13) d'un corps de support allongé opaque (10) respectif présente au moins 20 DEL disposées de manière à être espacées les unes des autres.

3. Toit de véhicule (1) selon la revendication 1 ou 2,
**caractérisé en ce**
**qu**'un corps de support allongé opaque (10) respectif présente au moins 5 éléments de fixation (14) disposés de manière à être espacés les uns des autres.

4. Toit de véhicule (1) selon l'une des revendications 1 à 3,
**caractérisé en ce**
**qu**'un corps de support allongé opaque (10) respectif est constitué d'une matière plastique opaque.

5. Toit de véhicule (1) selon l'une des revendications 1 à 4,
**caractérisé en ce**
**qu**'un corps de support allongé opaque (10) respectif est collé, par le biais d'une colle opaque, en des points de collage (16) sur la surface de bord non transparente de forme rectangulaire (4) de la surface vitrée (20).

6. Toit de véhicule (1) selon l'une des revendications 1 à 5,
**caractérisé en ce**
**que** la surface vitrée (20) présente des éléments de diffusion optique (15) destinés à répartir sur toute la surface le rayonnement des DEL d'un module à DEL (13) respectif, lequel rayonnement est injecté dans la surface de visualisation transparente de forme rectangulaire (5).

7. Toit de véhicule (1) selon l'une des revendications 1 à 6,
**caractérisé en ce**
**que** les éléments de fixation (14) destinés à fixer un corps de support allongé opaque (10) respectif dans le ciel de toit (9) sont réalisés sous forme de crochets de fixation.

8. Toit de véhicule (1) selon l'une des revendications 1 à 7,
**caractérisé en ce**
**qu**'un corps de support allongé opaque (10) respectif est divisé en au moins deux segments de support disposés de manière à être espacés l'un de l'autre.

9. Toit de véhicule (1) selon la revendication 8,
**caractérisé en ce**
**qu**'un segment de support d'un corps de support allongé opaque (10) présente au moins deux éléments de fixation (14) moulés.

10. Toit de véhicule (1) selon la revendication 8 ou 9,
**caractérisé en ce**
**qu**'un segment de support d'un corps de support allongé opaque (10) présente au moins 5 DEL.
